# EUROPÄISCHE PATENTSCHRIFT

(11) **EP 1 802 505 B1**
(45) Veröffentlichungstag und Bekanntmachung des Hinweises auf die Patenterteilung: **19.03.2008**
(21) Anmeldenummer: 05801551.2
(22) Anmeldetag: 07.10.2005
(51) Int. Cl.: B60T 13/57

(54) **PNEUMATISCHER BREMSKRAFTVERSTÄRKER**
PNEUMATIC BRAKE BOOSTER
SERVOFREIN PNEUMATIQUE

(30) Priorität: 15.10.2004 DE 102004050581; 04.10.2005 DE 102005047528
(43) Veröffentlichungstag der Anmeldung: 04.07.2007
(73) Patentinhaber: Continental Teves AG & Co. oHG, 60488 Frankfurt am Main (DE)
(72) Erfinder: KRÄMER, Horst, 65462 Ginsheim-Gustavsburg (DE); HABER, Michael, 12685 Berlin (DE)
(86) Internationale Anmeldenummer: PCT/EP2005/055085
(87) Internationale Veröffentlichungsnummer: WO 2006/042795

(56) Entgegenhaltungen:
- DE-A1- 4 124 683
- US-A- 5 626 069
- US-A1- 2003 066 416

## Beschreibung

Die Erfindung betrifft einen pneumatischen Bremskraftverstärker für Kraftfahrzeuge mit einem Verstärkergehäuse, welches durch wenigstens eine, mit einem pneumatischen Differenzdruck beaufschlagbare, axial bewegliche Wand in wenigstens eine Arbeitskammer und wenigstens eine Unterdruckkammer unterteilt ist, mit einem, den Differenzdruck steuernden, in einem Steuergehäuse angeordneten Steuerventil zur Verbindung der Arbeitskammer mit der Unterdruckkammer oder der Atmosphäre, welches aus zwei konzentrisch zueinander angeordneten Dichtsitzen sowie einem elastisch verformbaren Ventilkörper besteht, mit einem betätigbaren Eingangsglied, welches mit einem Ventilkolben verbunden ist, dessen Bewegung in axialer Richtung durch ein in das Steuergehäuse in radialer Richtung einführbares Querglied begrenzt ist, mit einem elastischen Reaktionselement, mit einem Ausgangsglied, welches einen Hauptzylinder mit einer Verstärkungskraft beaufschlagt, sowie mit Be- und Entlüftungskanälen, welche im Steuergehäuse vorgesehenen sind und Evakuieren oder Belüften der Arbeitskammer ermöglichen.

Ein derartiger pneumatischer Bremskraftverstärker ist beispielsweise aus der DE 41 24 683 A1 bekannt. Dieser weist jeweils vier Be- und Entlüftungskanäle auf, wobei ein U-förmige Querglied zwei diametral gegenüberliegende Entlüftungskanäle umgreift. Als verbesserungswürdig wird das Ansprech- und Löseverhalten des bekannten Bremskraftverstärkers angesehen.

Es ist Aufgabe der Erfindung, einen dahingehend verbesserten Bremskraftverstärker bereitzustellen.

Die Aufgabe wird erfindungsgemäß dadurch gelöst, dass im Steuergehäuse zwei Entlüftungskanäle sowie zwei Belüftungskanäle vorgesehen sind, welche sich über einen gesamten verfügbaren Kreisquerschnitt des Steuergehäuses erstrecken, und die Belüftungskanäle jeweils von zwei Stegen zur Aufnahme des Quergliedes unterbrochen sind. Durch eine derartige Anordnung von jeweils zwei Be- und Entlüftungskanälen kann ein möglichst großer Strömungsquerschnitt der Kanäle und damit eine schnelle Be- und Entlüftung der Arbeitskammer realisiert werden. Dadurch verbessert sich das Ansprech- und Löseverhalten des Bremskraftverstärkers, welches von der Schnelligkeit der Be- und Entlüftung der Arbeitskammer abhängt. Die Belüftungskanäle sind lediglich durch einen geringst möglichen Querschnitt der Stege unterbrochen.

Eine weitere Verbesserung der Ansprechdynamik wird dadurch erreicht, dass sich die Belüftungskanäle in axialer Richtung annähernd über die Länge der Entlüftungskanäle erstrecken. Damit wird der Strömungsquerschnitt der Belüftungskanäle erheblich vergrößert. Gleichzeitig wird die Luftströmung verbessert, da der axiale Abstand zwischen den Belüftungskanälen und dem strömungskritischen Bereich der Dichtsitze des Steuerventils optimal verkürzt wird.

Vorzugsweise sind die Be- und Entlüftungskanäle jeweils diametral gegenüberliegend auf einem Umfang des Steuergehäuses symmetrisch verteilt angeordnet.

Eine vorteilhafte Weiterbildung der Erfindung wird dadurch erzielt, dass sich die Entlüftungskanäle jeweils über einen Winkel von ca. 80° und sich die Belüftungskanäle jeweils über einen Winkel von ca. 100° des verfügbaren Kreisquerschnittes des Steuergehäuses erstrecken. Diese Aufteilung hat sich als optimales Verhältnis zwischen Ansprech- und Lösedynamik erwiesen.

Vorzugsweise sind die Stege innerhalb des einen Belüftungskanals diametral gegenüberliegend zu den Stegen des zweiten Belüftungskanals auf dem Umfang des Steuergehäuses symmetrisch verteilt angeordnet.

Um die Montagefreundlichkeit des erfindungsgemäßem Bremskraftverstärkers zu verbessern, sind das Reaktionselement sowie ein Kopfflansch des Ausgangsgliedes in einer Hülse angeordnet, welche im wesentlichen zylindrisch ausgestaltet und an dem Steuergehäuse angeordnet ist, so dass das Reaktionselement in axialer Richtung an den Kopfflansch einerseits sowie das Steuergehäuse und den Ventilkolben andererseits angrenzt und in radialer Richtung an der Hülse anliegt. Ferner ist vorteilhaft, dass dadurch die Spaltextrusion des Reaktionselementes im Übergangsbereich zwischen Hülse und Steuergehäuse minimiert werden kann, welche zu einer Beschädigung des Reaktionselementes führt.

Die Hülse weist in vorteilhafter Weiterbildung der Erfindung an ihren Enden Mittel zur Montageverbesserung auf. Diese können beispielsweise als Fase oder als radial nach außen ausgebildeter Kragen ausgebildet sein.

Die Hülse ist vorteilhafterweise mittels eines Haltelementes in axialer Richtung fixiert, welches durch eine Rückstellfeder des Bremskraftverstärkers vorgespannt vorgesehen ist, wobei das Halteelement gleichzeitig der Führung des Ausgangsgliedes dient. Ein zusätzliches Haltelement für die Hülse entfällt.

Alle bisher beschriebenen vorteilhaften Ausführungsformen und Weiterbildungen der Erfindung können auch bei einem Bremskraftverstärker in Tandembauweise ausgebildet sein, wobei der Innenraum des Bremskraftverstärkers mit Hilfe einer Trennwand in einen ersten und einen zweiten Verstärkerraum unterteilt ist, wobei die Trennwand eine mittig angeordnete, kreisförmige Ausnehmung aufweist, welche von dem Steuergehäuse durchgriffen ist und die Trennwand mittels eines Dichtelementes dichtend an dem Steuergehäuse anliegt, mit einer ersten sowie einer zweiten beweglichen Wand, die den ersten Verstärkerraum in eine erste Unterdruckkammer und in eine erste Arbeitskammer und den zweiten Verstärkerraum eine zweite Unterdruckkammer und in eine zweite Arbeitskammer unterteilen, sowie mit einem oder mehreren Verbindungskanälen zwischen der ersten Arbeitskammer und der zweiten Arbeitskammer für einen Druckausgleich zwischen diesen beiden Kammer. Vorteilhaft für eine wirtschaftliche Herstellung des Steuergehäuse ist, dass die Verbindungskanäle und die Belüftungskanäle des Steuergehäuses um einen Winkel von ca. 90° bezogen auf dessen Mittelachse versetzt zueinander angeordnet sind. Dadurch ist eine Fertigung des Steuergehäuses mit bis zu vier Nestern im Spritzwerkzeug möglich.

Nachstehend wird die Erfindung anhand der Zeichnung erläutert, welches ein Ausführungsbeispiel zeigt. Es zeigt jeweils stark schematisiert:
- Figur 1: eine Teilansicht eines Ausführungsbeispieles eines erfindungsgemäßen Bremskraftverstärkers im Längsschnitt;
- Figur 2: eine Seitenansicht eines Steuergehäuses des erfindungsgemäßen Bremskraftverstärkers gemäß Fig. 1;
- Figur 3: einen Querschnitt des Steuergehäuses gemäß Fig. 2 entlang der Linie A-A und
- Figur 4: einen Längsschnitt des Steuergehäuses gemäß Fig. 2 entlang der Linie B-B.

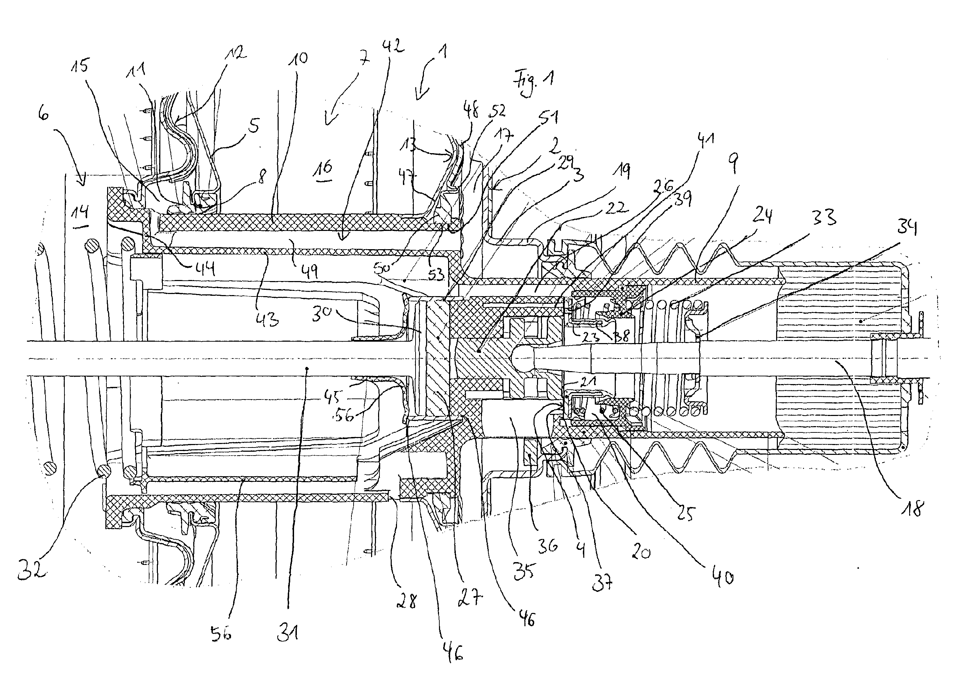

Fig. 1 zeigt ein Ausführungsbeispiel eines erfindungsgemäßen pneumatischen Bremskraftverstärkers 1 in Tandembauweise im Längsschnitt, welcher ein Verstärkergehäuse 2 umfasst, das eine erste Gehäusehalbschale 3 und eine nicht dargestellte zweite Gehäusehalbschale aufweist, die vorzugsweise mit Hilfe von umformtechnischen Maßnahmen miteinander verpresst sind. Der Innenraum des Verstärkergehäuses 2 wird mit Hilfe einer in etwa mittig angeordneten, ortsfesten Trennwand 5 in einen ersten, vorderen, hauptzylinderseitigen Verstärkerraum 6 sowie einen zweiten, hinteren, bremspedalseitigen Verstärkerraum 7 aufgeteilt, wobei die Trennwand 5 eine mittig angeordnete, kreisförmige Ausnehmung 8 aufweist, welche von einem Steuergehäuse 9 bzw. dessen zylindrischen Verlängerung 10 durchgriffen ist. Die Trennwand 5 liegt mittels eines Dichtelementes 11 dichtend an der Verlängerung 10 an.

Der erste, vordere Verstärkerraum 6 wird durch eine erste bewegliche Wand 12 in eine erste Unterdruckkammer 14 konstanten Druckes und in eine erste Arbeitskammer 15 veränderlichen Druckes und der zweite, hintere Verstärkerraum 7 durch eine zweite bewegliche Wand 13 in eine zweite Unterdruckkammer 16 und eine zweite Arbeitskammer 17 unterteilt. Üblicherweise ist die zweite, nicht dargestellte Gehäusehalbschale mit einem Unterdruckanschluss versehen, mittels dessen die erste Unterdruckkammer 14 an eine geeignete Unterdruckquelle, beispielsweise einen Ansaugkrümmer des Kraftfahrzeugmotors, oder an eine Vakuumpumpe angeschlossen werden kann.

Die erste Gehäusehalbschale 3 ist mit einem axialen Abschnitt 19 kleineren Durchmessers versehen, in dem das Steuergehäuse 9 abgedichtet axial bewegbar geführt ist. In dem Inneren des Steuergehäuses 9 ist ein Steuerventil 4 vorgesehen, das eine kontrollierte Belüftung der beiden Arbeitskammern 15,17 ermöglicht und dadurch die Druckdifferenz zwischen den Unterdruckkammern 14,16 und den Arbeitskammern 15,17 steuert.

Das Steuerventil 4 ist durch ein Eingangsglied 18 betätigbar, das mit einem nicht dargestellten Bremspedal verbunden ist, und besteht aus einem am Steuergehäuse 9 ausgebildeten ersten Dichtsitz 20, einem, an einem mit dem Eingangsglied 18 verbundenen Ventilkolben 22 ausgebildeten zweiten Dichtsitz 21 sowie einem, mit beiden Dichtsitzen 20,21 zusammenwirkenden Ventilkörper 23, der mittels einer, sich an einem Führungselement 24 abstützenden Ventilfeder 25 gegen die Ventilsitze 20,21 gedrückt wird. Die zweite Arbeitskammer 17 ist mit der ersten Unterdruckkammer 14 über zwei seitlich im Steuergehäuse 9 verlaufende Entlüftungskanäle 26 verbindbar.

Die Bremskraft wird über ein stirnseitig am Steuergehäuse 9 anliegendes gummielastisches Reaktionselement 27 sowie ein, einen Kopfflansch 30 aufweisendes Ausgangsglied 31 auf einen Betätigungskolben eines nicht dargestellten Hauptzylinders der Kraftfahrzeugbremsanlage übertragen, der am unterdruckseitigen Ende des Bremskraftverstärkers 1 angebracht ist. Die an dem Eingangsglied 18 eingeleitete Eingangskraft wird auf das Reaktionselement 27 mittels des Ventilkolbens 22 übertragen.

Eine Rückstellfeder 32, die sich an der unterdruckseitigen Stirnwand des Verstärkergehäuses 2 abstützt, hält die beweglichen Wände 12,13 in der gezeigten Ausgangsstellung. Außerdem ist eine Rückholfeder 33 vorgesehen, die zwischen einem, an dem Eingangsglied 18 angeordneten Halteelement 34 und dem Führungselement 24 des Steuerventils 4 angeordnet ist und deren Kraft für eine Vorspannung des Ventilkolbens 22 bzw. seines Ventilsitzes 21 gegenüber dem Ventilkörper 23 sorgt.

Um die zweite Arbeitskammer 17 bei der Betätigung des Steuerventils 20 mit der Atmosphäre verbinden zu können, sind schließlich im Steuergehäuse 9 zwei Belüftungskanäle 35 ausgebildet.

Die Rückkehrbewegung des Ventilkolbens 22 am Ende eines Bremsvorganges wird dabei durch ein Querglied 36 begrenzt, welches in radialer Richtung in das Steuergehäuse 9 einführbar ist und das in der in der Zeichnung gezeigten Lösestellung des Bremskraftverstärkers an dem Verstärkergehäuse 2 anliegt.

Der Ventilkörper 23 weist eine mit den beiden Dichtsitzen 20,21 zusammenwirkende ringförmige Dichtfläche 37 auf, die mittels eines metallischen, L-förmigen Versteifungselementes 38 versteift ist und mit mehreren axialen Durchlässen 39 versehen ist.

Im Steuergehäuse 9 ist ein pneumatischer Raum 40 begrenzt. Die durch die Durchlässe 39 gebildeten, näher nicht bezeichneten Strömungskanäle verbinden den pneumatischen Raum 40 mit einem durch die Dichtsitze 20,21 begrenzten Ringraum 41, in dem die oben erwähnten Belüftungskanäle 35 münden, so dass der, auf der der Dichtfläche 37 abgewandten Seite des Ventilkörpers 23 ausgebildete pneumatische Raum 40 ständig mit der zweiten Arbeitskammer 17 in Verbindung steht und am Ventilkörper 23 ein Druckausgleich stattfindet.

Die Verbindung zwischen der ersten und der zweiten Unterdruckkammer 14,16 erfolgt durch einen oder mehrere Durchbrüche 28 in der Verlängerung 10 des Steuergehäuses 9, die im Bereich zwischen der Trennwand 5 und der zweiten beweglichen Wand 13 vorgesehen sind.

Ferner sind ein oder mehrere im wesentlich axial ausgerichtete Verbindungskanäle 42 in der Verlängerung 10 des Steuergehäuses 9 vorgesehen, welche die erste und die zweite Unterdruckkammer 14,16 miteinander verbinden. Vorzugsweise sind zwei Verbindungskanäle 42 vorgesehen, die sich in axialer Richtung von der zweiten Arbeitskammer 17 bis zur ersten Arbeitskammer 15 erstrecken und radial in die erste Arbeitskammer 15 einmünden. Dabei wird ein Verbindungskanal 42 jeweils durch axiale Seitenwände 43,49 und eine radiale Seitenwand 44 gebildet. Da Fig. 1 den Bremskraftverstärker 1 in einem Längsschnitt durch zwei Ebenen zeigt, ist der zweite Verbindungskanal 42 nicht sichtbar, jedoch geht der symmetrische Aufbau des Bremskraftverstärkers 1 aus den nachfolgend beschriebenen Figuren deutlich hervor.

Das Reaktionselement 27 sowie der Kopfflansch 30 des Ausgangsgliedes 31 sind in einer zylindrischen Hülse 29 angeordnet, die am Steuergehäuse 9 angeordnet ist und welche dazu dient, Beschädigungen des Steuergehäuses zu vermeiden, welche aus auf das Ausgangsglied wirkende Querkräfte resultieren können. Wie aus Fig. 1 ersichtlich ist, grenzt das Reaktionselement 27 in axialer Richtung einerseits an den Kopfflansch 30 sowie andererseits an das Steuergehäuse 9 und dem Ventilkolben 22 an. In radialer Richtung grenzt das Reaktionselement 27 an die Hülse 29 an. Durch die zylindrische Ausgestaltung der Hülse 29 wird die Spaltextrusion des Reaktionselementes 27 im Übergangsbereich zwischen Hülse 29 und Steuergehäuse 9 minimiert, die zur Beschädigung des Reaktionselementes 27 führen kann. Ferner ist die Hülse 29 einfach herstellbar und dadurch kostengünstig.

In axialer Richtung wird die Hülse 29 an dem Steuergehäuse 9 durch ein Halteelement 56 fixiert, welches seinerseits durch die Rückstellfeder 32 des Bremskraftverstärkers 1 vorgespannt wird. Aus Fig. 1 ist ersichtlich, dass das Halteelement 56 einen inneren, axialen, zylindrischen Fortsatz 45 aufweist, welcher der Führung des Ausgangsgliedes 31 in radialer Richtung dient.

Zur Erleichterung der Montage weist die Hülse 29 an ihren Enden Fasen 46 auf. Alternativ können auch an den Enden der Hülse 29 radial nach außen ausgebildete Krägen vorgesehen sein.

Die zweite bewegliche Wand 13 ist durch einen Membranteller 47 und eine daran anliegende Rollmembran 48 gebildet, deren radial innenliegender Dichtwulst 50 in einer, in der Verlängerung 10 des Steuergehäuses 9 ausgebildeten Ringnut 51 unter Zuhilfenahme einer radial nach innen gerichteten Vorspannung eingespannt ist.

Es ist ersichtlich, dass die Rollmembran 48 eine Soll-Knickstelle aufweist, an welcher die Rollmembran 48 nach der Montage auf dem Steuergehäuse 9 gefaltet ist. Die dadurch entstehende Falte 52 ermöglicht eine große Vorspannung des Dichtwulstes 50 und gewährleistet gleichzeitig die Anlage der Rollmembran 48 an dem Membranteller 47. Durch die große radiale Vorspannung der Rollmembran 48 kann ein geringer radialer Bauraum der Schnittstelle Steuergehäuse-Membranteller-Rollmembran ermöglicht werden, insbesondere eine geringe radiale Tiefe der Ringnut 51, in welche der Dichtwulst 50 eingeknöpft ist.

Ferner weist der Dichtwulst 50 auf einer Unterseite eine umlaufende Dichtfläche 53 auf.

Um eine sichere Einspannung der Rollmembran 48 zu gewährleisten, ist der radial innenliegende Dichtwulst 50 derart ausgestaltet, dass er in Richtung der zweiten Arbeitskammer 17 kippen kann, wobei die Dichtfläche 53 von einem Boden der Ringnut 51 abgehoben wird, um einen schnellen Druckabbau von der zweiten Unterdruckkammer 16 in Richtung Arbeitskammer 17 über den Dichtwulst 50 zu ermöglichen. Durch die Kipp-Funktion des Dichtwulstes 50 kann auch im Falle eines Druckstoßes von der Seite der zweiten Unterdruckkammer 16, welcher beispielsweise bei einer Betätigung des Bremskraftverstärkers 1 ohne Vakuum bei geöffneten Radkreisen oder bei plötzlichem Abziehen eines Vakuumschlauches von der ersten Unterdruckkammer 14 des Bremskraftverstärkers 1 entstehen kann, ein Ausknöpfen der Rollmembran 48 verhindert werden und der Druck kann in Richtung Arbeitskammer 17 abgebaut werden.

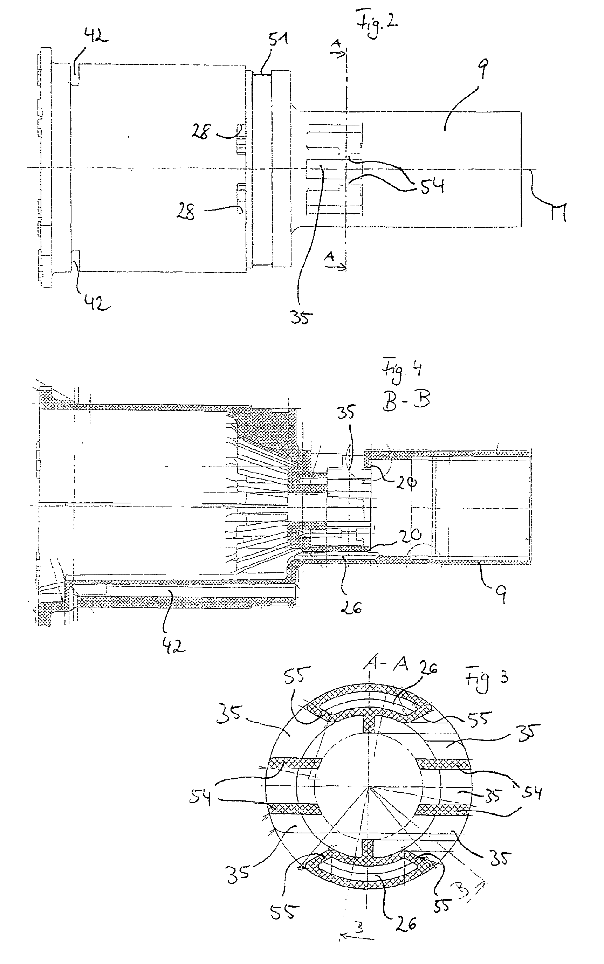

Fig. 2 bis 4 zeigen verschiedene Ansichten und Schnitte des Steuergehäuses 9 des gemäß Fig. 1 beschriebenen Bremskraftverstärkers 1. Dabei zeigt Fig. 2 eine Seitenansicht, Fig. 3 einen Querschnitt entlang der in Fig. 2 gezeigten Linie A-A und Fig. 4 einen Längsschnitt entlang der in Fig. 3 gezeigten Linie B-B.

Aus Fig. 2 und Fig. 3 wird deutlich, dass die Belüftungskanäle 35 jeweils von zwei Stegen 54 unterbrochen sind, welche der Aufnahme, Führung und Fixierung des Quergliedes 36 dienen. Die Stege 54 innerhalb des einen Belüftungskanals 35 sind dabei diametral gegenüberliegend zu den Stegen 54 innerhalb des zweiten Belüftungskanals 35 auf einem Umfang des Steuergehäuses 9 symmetrisch verteilt angeordnet.

Wie insbesondere aus Fig. 3 ersichtlich ist, sind die Be- und Entlüftungskanäle 26,35 jeweils diametral gegenüberliegend auf dem Umfang des Steuergehäuses 9 symmetrisch verteilt angeordnet. Die zwei Entlüftungskanäle 26 erstrecken sich jeweils über einen Winkel von ca. 80° und die zwei Belüftungskanäle 35 erstrecken sich jeweils über einen Winkel von ca. 100° des verfügbaren Kreisquerschnittes des Steuergehäuses 9. Diese Aufteilung hat sich als optimales Verhältnis zwischen Ansprech- und Lösedynamik erwiesen. Ferner ist erkennbar, dass die Belüftungskanäle 35 lediglich durch einen für die Stabilität geringst möglichen Querschnitt der Stege 54 unterbrochen sind. So ist ein möglicht großer Strömungsquerschnitt der Kanäle 26,35 realisiert, was eine schnelle Be- und Entlüftung der Arbeitskammer ermöglicht. Dadurch verbessert sich das Ansprech- und Löseverhalten des Bremskraftverstärkers 1, welches von der Schnelligkeit der Be-und Entlüftung der Arbeitskammern 15,17 abhängt.

Die Belüftungskanäle 35 weisen einen sich radial erstreckenden Austrittsbereich auf, welcher durch Außenwände 55 der Entlüftungskanäle 26 begrenzt ist.

Aus Fig. 4 ist ersichtlich, dass sich die Belüftungskanäle 35 in axialer Richtung annähernd über die Länge der Entlüftungskanäle 26 erstrecken, womit der Strömungsquerschnitt der Belüftungskanäle 35 erheblich vergrößert wird. Gleichzeitig wird die Luftströmung verbessert, da der axiale Abstand zwischen den Belüftungskanälen 35 und dem strömungskritischen Bereich der Dichtsitze 20,21 des Steuerventils 4 optimal verkürzt wird.

Wie aus Fig. 2 erkennbar ist, sind die Verbindungskanäle 42 und die Belüftungskanäle 35 um einen Winkel von ca. 90° bezogen auf dessen Mittelachse M versetzt zueinander angeordnet. Dadurch ist eine sehr wirtschaftliche Fertigung des Steuergehäuses 9 mit bis zu vier Nestern im Spritzwerkzeug möglich.

Der erfindungsgemäße Bremskraftverstärker 1 ist als TandemAusführung dargestellt. Grundsätzlich ist die Erfindung jedoch für alle pneumatische Bremskraftverstärker in Tandem- und Single-Ausführung geeignet.

### Bezugszeichenliste

- 1: Bremskraftverstärker
- 2: Verstärkergehäuse
- 3: Gehäusehalbschale
- 4: Steuerventil
- 5: Trennwand
- 6: vorderer Verstärkerraum
- 7: hinterer Verstärkerraum
- 8: Ausnehmung
- 9: Steuergehäuse
- 10: Verlängerung
- 11: Dichtelement
- 12: erste bewegliche Wand
- 13: zweite bewegliche Wand
- 14: erste Unterdruckkammer
- 15: erste Arbeitskammer
- 16: zweite Unterdruckkammer
- 17: zweite Arbeitskammer
- 18: Eingangsglied
- 19: Abschnitt
- 20: erster Dichtsitz
- 21: zweiter Dichtsitz
- 22: Ventilkolben
- 23: Ventilkörper
- 24: Führungselement
- 25: Ventilfeder
- 26: Entlüftungskanal
- 27: Reaktionselement
- 28: Durchbruch
- 29: Hülse
- 30: Kopfflansch
- 31: Ausgangsglied
- 32: Rückstellfeder
- 33: Rückholfeder
- 34: Halteelement
- 35: Belüftungskanal
- 36: Querglied
- 37: Dichtfläche
- 38: Versteifungselement
- 39: Durchlass
- 40: Raum
- 41: Ringraum
- 42: Verbindungskanal
- 43: Seitenwand
- 44: Seitenwand
- 45: Fortsatz
- 46: Fase
- 47: Membranteller
- 48: Rollmembran
- 49: Seitenwand
- 50: Dichtwulst
- 51: Ringnut
- 52: Falte
- 53: Dichtfläche
- 54: Steg
- 55: Außenwand
- 56: Haltelement

- M: Mittelachse

## Patentansprüche

1. Pneumatischer Bremskraftverstärker (1) für Kraftfahrzeuge
mit einem Verstärkergehäuse (2), welches durch wenigstens eine, mit einem pneumatischen Differenzdruck beaufschlagbare, axial bewegliche Wand (12,13) in wenigstens eine Arbeitskammer (15,17) und wenigstens eine Unterdruckkammer (14,16) unterteilt ist,
mit einem, den Differenzdruck steuernden, in einem Steuergehäuse (9) angeordneten Steuerventil (4) zur Verbindung der Arbeitskammer (15,17) mit der Unterdruckkammer (14,16) oder der Atmosphäre, welches aus zwei konzentrisch zueinander angeordneten Dichtsitzen (20,21) sowie einem elastisch verformbaren Ventilkörper (23) besteht,
mit einem betätigbaren Eingangsglied (18), welches mit einem Ventilkolben (22) verbunden ist, dessen Bewegung in axialer Richtung durch ein in das Steuergehäuse (9) in radialer Richtung einführbares Querglied (36) begrenzt ist,
mit einem elastischen Reaktionselement (27),
mit einem Ausgangsglied (31), welches einen Hauptzylinder mit einer Verstärkungskraft beaufschlagt,
sowie mit Be- und Entlüftungskanälen (35,26), welche im Steuergehäuse (9) vorgesehenen sind und Evakuieren oder Belüften der Arbeitskammer (15,17) ermöglichen,
**dadurch gekennzeichnet, dass** im Steuergehäuse (9) zwei Entlüftungskanäle (26) sowie zwei Belüftungskanäle (35) vorgesehen sind, welche sich über einen gesamten verfügbaren Kreisquerschnitt des Steuergehäuses (9) erstrecken, und die Belüftungskanäle (35) jeweils von zwei Stegen (54) zur Aufnahme des Quergliedes (36) unterbrochen sind.

2. Pneumatischer Bremskraftverstärker (1) nach Anspruch 1, **dadurch gekennzeichnet, dass** sich die Belüftungskanäle (35) in axialer Richtung annähernd über die Länge der Entlüftungskanäle (26) erstrecken

3. Pneumatischer Bremskraftverstärker (1) nach Anspruch 2, **dadurch gekennzeichnet, dass** die Be- und Entlüftungskanäle (35,26) jeweils diametral gegenüberliegend auf einem Umfang des Steuergehäuses (9) symmetrisch verteilt angeordnet sind.

4. Pneumatischer Bremskraftverstärker (1) nach Anspruch 3, **dadurch gekennzeichnet, dass** sich die Entlüftungskanäle (26) jeweils über einen Winkel von ca. 80° und sich die Belüftungskanäle (36) jeweils über einen Winkel von ca. 100° des verfügbaren Kreisquerschnittes des Steuergehäuses (9) erstrecken.

5. Pneumatischer Bremskraftverstärker (1) nach Anspruch 3 oder 4, **dadurch gekennzeichnet, dass** die Stege (54) innerhalb des einen Belüftungskanals (35) diametral gegenüberliegend zu den Stegen (54) innerhalb des zweiten Belüftungskanals (35) auf dem Umfang des Steuergehäuses (9) symmetrisch verteilt angeordnet sind.

6. Pneumatischer Bremskraftverstärker (1) nach Anspruch 5, **dadurch gekennzeichnet, dass** das Reaktionselement (27) sowie ein Kopfflansch (30) des Ausgangsgliedes (31) in einer Hülse (29) angeordnet sind, welche im wesentlichen zylindrisch ausgestaltet ist und an dem Steuergehäuse (9) angeordnet ist, so dass das Reaktionselement (27) in axialer Richtung an den Kopfflansch (30) einerseits sowie das Steuergehäuse (9) und den Ventilkolben (22) andererseits angrenzt und in radialer Richtung an der Hülse (29) anliegt.

7. Pneumatischer Bremskraftverstärker (1) nach Anspruch 6, **dadurch gekennzeichnet, dass** die zylindrische Hülse (29) an ihren Enden Mittel zur Montageverbesserung aufweist.

8. Pneumatischer Bremskraftverstärker (1) nach Anspruch 7, **dadurch gekennzeichnet, dass** die Hülse (29) an ihren Enden gefast ausgebildet ist.

9. Pneumatischer Bremskraftverstärker (1) nach Anspruch 7, **dadurch gekennzeichnet, dass** die Hülse (29) an ihren Enden einen nach radial außen ausgebildeten Kragen aufweist.

10. Pneumatischer Bremskraftverstärker (1) nach Anspruch 8 oder 9, **dadurch gekennzeichnet, dass** die Hülse (29) mittels eines Haltelementes (56) in axialer Richtung fixiert ist, welches durch eine Rückstellfeder (32) des Bremskraftverstärkers (1) vorgespannt vorgesehen ist, wobei das Halteelement (56) gleichzeitig der Führung des Ausgangsgliedes (31) dient.

11. Pneumatischer Bremskraftverstärker (1) nach einem der vorangegangenen Ansprüche, wobei der Bremskraftverstärker (1) in Tandembauweise ausgebildet ist, dessen Innenraum mit Hilfe einer Trennwand (5) in einen ersten und einen zweiten Verstärkerraum (6,7) unterteilt ist, wobei die Trennwand (5) eine mittig angeordnete, kreisförmige Ausnehmung (8) aufweist, welche von dem Steuergehäuse (9) durchgriffen ist und die Trennwand (5) mittels eines Dichtelementes (11) dichtend an dem Steuergehäuse (9) anliegt, mit einer ersten sowie einer zweiten beweglichen Wand (12,13), die den ersten Verstärkerraum (6) in eine erste Unterdruckkammer (14) und in eine erste Arbeitskammer (15) und den zweiten Verstärkerraum (7) eine zweite Unterdruckkammer (16) und in eine zweite Arbeitskammer (17) unterteilen, sowie mit einem oder mehreren Verbindungskanälen (42) zwischen der ersten Arbeitskammer (15) und der zweiten Arbeitskammer (17) für einen Druckausgleich zwischen diesen beiden Kammer (15,17), **dadurch gekennzeichnet, dass** die Verbindungskanäle (42) und die Belüftungskanäle (35) des Steuergehäuses (9) um einen Winkel von ca. 90° bezogen auf dessen Mittelachse (M) versetzt zueinander angeordnet sind.

## Claims

1. Pneumatic brake booster (1) for motor vehicles comprising a booster housing (2), which is subdivided into at least one working chamber (15, 17) and at least one vacuum chamber (14, 16) by at least one axially movable wall (12, 13) to which a pneumatic differential pressure can be applied,
a control valve (4) controlling the differential pressure and being arranged in a control housing (9) in order to connect the working chamber (15, 17) to the vacuum chamber (14, 16) or to the atmosphere, the said valve being composed of two concentrically arranged sealing seats (20, 21) as well as an elastically deformable valve member (23),
an operable input member (18), which is connected to a valve piston (22) whose movement in an axial direction is limited by a transverse member (36) that can be introduced into the control housing (9) in a radial direction,
an elastic reaction element (27),
an output member (31) applying a boosting force to a master cylinder,
as well as ventilating and bleeding ducts (35, 26) which are provided in the control housing (9) and allow evacuating or ventilating the working chamber (15, 17),
**characterized in that** two bleeding ducts (26) and two ventilating ducts (35) are provided in the control housing (9), which extend over a total available circular cross-section of the control housing (9), and the ventilating ducts (35) are interrupted in each case by two webs (54) in order to accommodate the transverse member (36) .

2. Pneumatic brake booster (1) as claimed in claim 1,
**characterized in that** the ventilating ducts (35) extend in an axial direction roughly over the length of the bleeding ducts (26).

3. Pneumatic brake booster (1) as claimed in claim 2,
**characterized in that** the ventilating and bleeding ducts (35, 26) are respectively arranged diametrically opposite each other distributed symmetrically on a periphery of the control housing (9).

4. Pneumatic brake booster (1) as claimed in claim 3,
**characterized in that** the bleeding ducts (26) extend in each case at an angle of roughly 80° and the ventilating ducts (35) extend in each case at an angle of roughly 100° of the available circular cross-section of the control housing (9).

5. Pneumatic brake booster (1) as claimed in claim 3 or 4,
**characterized in that** the webs (54) are arranged inside the one ventilating duct (35) diametrically opposite the webs (54) inside the second ventilating duct (35) distributed symmetrically on the periphery of the control housing (9).

6. Pneumatic brake booster (1) as claimed in claim 5,
**characterized in that** the reaction element (27) and a head flange (30) of the output member (31) are arranged in a sleeve (29), which has a basically cylindrical configuration and is arranged on the control housing (9) so that the reaction element (27) in an axial direction adjoins the head flange (30), on the one hand, and the control housing (9) and the valve piston (22), on the other hand, while it abuts the sleeve (29) in a radial direction.

7. Pneumatic brake booster (1) as claimed in claim 6,
**characterized in that** the cylindrical sleeve (29) at its ends includes a means to improve the assembly.

8. Pneumatic brake booster (1) as claimed in claim 7,
**characterized in that** the sleeve (29) is designed in a chamfered way at its ends.

9. Pneumatic brake booster (1) as claimed in claim 7,
**characterized in that** the sleeve (29) at its ends includes a collar oriented in a radially outward direction.

10. Pneumatic brake booster (1) as claimed in claim 8 or 9,
**characterized in that** the sleeve (29) is fixed in an axial direction by means of a holding element (56), which is provided so as to be preloaded by a restoring spring (32) of the brake booster (1), with the holding element (56) being additionally used to guide the output member (31).

11. Pneumatic brake booster (1) as claimed in any one of the preceding claims, wherein the brake booster (1) is designed in tandem-type construction, and the interior of the brake booster is subdivided by means of a partition (5) into a first and a second booster chamber (6, 7), with the partition (5) including a centrically arranged circular recess (8), which is penetrated by the control housing (9) and the partition (5) being in sealing abutment on the control housing (9) by means of a sealing element (11), with a first and a second movable wall (12, 13) subdividing the first booster chamber (6) into a first vacuum chamber (14) and a first working chamber (15) and the second booster chamber (7) into a second vacuum chamber (16) and a second working chamber (17), as well as with one or a plurality of connecting channels (42) between the first working chamber (15) and the second working chamber (17) for the purpose of pressure balance between these two chambers (15, 17),
**characterized in that** the connecting channels (42) and the ventilating ducts (35) of the control housing (9) are arranged in relation to each other offset by an angle of roughly 90° with respect to the center line (M) thereof.

## Revendications

1. Servofrein pneumatique (1) pour véhicule automobile
avec un boîtier de servofrein (2) qui est divisé par au moins une paroi (12, 13) axialement mobile et pouvant être sollicitée par une pression différentielle pneumatique, en au moins une chambre de travail (15, 17) et au moins une chambre sous dépression (14, 16),
avec une soupape de commande (4), disposée dans un boîtier de commande (9) et commandant la pression différentielle, pour la liaison de la chambre de travail (15, 17) avec la chambre sous dépression (14, 16) ou l'atmosphère, laquelle soupape de commande est constituée de deux sièges d'étanchéité (20, 21) disposés concentriquement l'un à l'autre ainsi que d'un corps de soupape (23) déformable élastiquement,
avec un organe d'entrée (18) pouvant être actionné, qui est relié à un piston de soupape (22) dont le mouvement dans la direction axiale est limité par un organe transversal (36) pouvant être introduit dans le boîtier de commande (9) dans la direction radiale,
avec un élément de réaction (27) élastique,
avec un organe de sortie (31) qui agit sur un cylindre principal avec une force d'amplification,
ainsi qu'avec des canaux d'aération et de purge d'air (35, 26) qui sont prévus dans le boîtier de commande (9) et permettent la mise à l'atmosphère ou la ventilation de la chambre de travail (15, 17),
**caractérisé en ce que** dans le boîtier de commande (9) sont prévus deux canaux de purge d'air (26) ainsi que deux canaux d'aération (35) qui s'étendent sur toute une section circulaire disponible du boîtier de commande (9), et les canaux d'aération (35) sont interrompus chacun par deux pontets (54) pour recevoir l'organe transversal (36).

2. Servofrein pneumatique (1) selon la revendication 1, **caractérisé en ce que** les canaux d'aération (35) s'étendent dans la direction axiale approximativement sur la longueur des canaux de purge d'air (26).

3. Servofrein pneumatique (1) selon la revendication 2, **caractérisé en ce que** les canaux d'aération et de purge d'air (35, 26) sont disposés symétriquement répartis et diamétralement opposés sur un pourtour du boîtier de commande (9).

4. Servofrein pneumatique (1) selon la revendication 3, **caractérisé en ce que** les canaux de purge d'air (26) s'étendent chacun sur un angle d'environ 80° et les canaux d'aération (36) s'étendent chacun sur un angle d'environ 100° de la section circulaire disponible du boîtier de commande (9).

5. Servofrein pneumatique (1) selon la revendication 3 ou 4, **caractérisé en ce que** les pontets (54) à l'intérieur d'un canal d'aération (35) sont disposés symétriquement répartis et diamétralement opposés aux pontets (54) à l'intérieur du second canal d'aération (35), sur le pourtour du boîtier de commande (9).

6. Servofrein pneumatique (1) selon la revendication 5, **caractérisé en ce que** l'élément de réaction (27) ainsi qu'une bride de tête (30) de l'organe de sortie (31) sont disposés dans une douille (29) qui est de forme sensiblement cylindrique et disposée sur le boîtier de commande (9), ce qui fait que l'élément de réaction (27) est adjacent dans la direction axiale d'une part à la bride de tête (30) et d'autre part au boîtier de commande (9) et au piston de soupape (22), et s'applique contre la douille (29), dans la direction radiale.

7. Servofrein pneumatique (1) selon la revendication 6, **caractérisé en ce que** la douille cylindrique (29) présente à ses extrémités des moyens pour améliorer le montage.

8. Servofrein pneumatique (1) selon la revendication 7, **caractérisé en ce que** la douille (29) est réalisée biseautée à ses extrémités.

9. Servofrein pneumatique (1) selon la revendication 7, **caractérisé en ce que** la douille (29) présente à ses extrémités une collerette réalisée radialement vers l'extérieur.

10. Servofrein pneumatique (1) selon la revendication 8 ou 9, **caractérisé en ce que** la douille (29) est fixée dans la direction axiale au moyen d'un élément de retenue (56) qui est prévu précontraint par un ressort de rappel (32) du servofrein (1), l'élément de retenue (56) servant en même temps à guider l'organe de sortie (31).

11. Servofrein pneumatique (1) selon l'une quelconque des revendications précédentes, dans lequel le servofrein (1) est réalisé dans une construction tandem dont le volume intérieur est divisé à l'aide d'une cloison (5) en un premier compartiment de servofrein (6) et en un second compartiment de servofrein (7), la cloison (5) présentant un évidement (8) de forme circulaire, disposé au centre, qui est traversé par le boîtier de commande (9) et la cloison (5) s'applique, au moyen d'un élément d'étanchéité (11), de manière étanche contre le boîtier de commande (9), avec une première ainsi qu'une seconde paroi mobile (12, 13) qui divisent le premier compartiment de servofrein (6) en une première chambre sous dépression (14) et en une première chambre de travail (15), et le second compartiment de servofrein (7) en une seconde chambre sous dépression (16) et en une seconde chambre de travail (17), ainsi qu'avec un ou plusieurs canaux de liaison (42) entre la première chambre de travail (15) et la seconde chambre de travail (17) pour une compensation de la pression entre ces deux chambres (15, 17), **caractérisé en ce que** les canaux de liaison (42) et les canaux d'aération (35) du boîtier de commande (9) sont disposés décalés les uns par rapport aux autres d'un angle d'environ 90° par rapport à son axe médian (M).
